# EUROPÄISCHE PATENTSCHRIFT

(11) **EP 1 963 694 B1**
(45) Veröffentlichungstag und Bekanntmachung des Hinweises auf die Patenterteilung: **15.07.2009**
(21) Anmeldenummer: 06818124.7
(22) Anmeldetag: 09.12.2006
(51) Int. Cl.: F16C 19/34, F16C 43/06

(54) **RADIALWÄLZLAGER, INSBESONDERE EINREIHIGES KUGELROLLENLAGER**
RADIAL ROLLING BEARING, IN PARTICULAR SINGLE-ROW SPHERICAL-ROLLER BEARING
PALIER A ROULEMENT RADIAL, NOTAMMENT ROULEMENT A BILLES A UNE RANGEE

(30) Priorität: 23.12.2005 DE 102005061792
(43) Veröffentlichungstag der Anmeldung: 03.09.2008
(73) Patentinhaber: Schaeffler KG, 91074 Herzogenaurach (DE)
(72) Erfinder: HOFMANN, Heinrich, 97422 Schweinfurt (DE); DÖPPLING, Horst, 91074 Herzogenaurach (DE); GOPPELT, Georg, 91738 Pfofeld (DE)
(86) Internationale Anmeldenummer: PCT/DE2006/002192
(87) Internationale Veröffentlichungsnummer: WO 2007/076771

(56) Entgegenhaltungen:
- AT-B- 88 755
- DE-A1- 4 334 195
- JP-A- 11 264 413

## Beschreibung

### Gebiet der Erfindung

Die Erfindung betrifft ein Radialwälzlager nach den oberbegriffsbildenden Merkmalen des Patentanspruchs 1, und sie ist insbesondere vorteilhaft an einreihigen Kugelrollenlagern realisierbar, die beispielsweise als Festlager für die An- und Abtriebswellen eines Kfz-Schaltgetriebes zur Anwendung kommen.

### Hintergrund der Erfindung

Dem Fachmann in der Wälzlagertechnik ist es allgemein bekannt, dass einreihige Rillenkugellager starre, nicht zerlegbare Radialwälzlager sind, die sich vor allem dadurch auszeichnen, dass deren radiale und axiale Tragfähigkeit gleichermaßen hoch ist und dass diese wegen ihrer geringen Reibung die höchsten Drehzahlgrenzen aller Lagerarten aufweisen. Diese Rillenkugellager sind seit langem bekannt und bestehen im Wesentlichen aus einem äußeren Lagerring und einem inneren Lagerring sowie aus einer Anzahl zwischen den Lagerringen angeordneten Kugeln als Wälzkörpern. Dabei sind in die Innenseite des äußeren Lagerrings und in die Außenseite des inneren Lagerrings jeweils rillenförmige Kugellaufbahnen eingearbeitet in denen die Kugeln durch einen Lagerkäfig in gleichmäßigen Abständen zueinander geführt werden. Das Befüllen von Radialkugellagern mit den Kugeln erfolgt dabei durch das mit der DE 168 499 bekannt gewordene Exzentermontageverfahren, bei dem die beiden Lagerringe exzentrisch zueinander angeordnet werden und der dadurch entstehende freie Raum zwischen den Lagerringen mit den Kugeln befüllt wird. Größe und Anzahl der Kugeln sind entsprechend der Lagergröße jeweils so bemessen, dass der innere Lagerring zwischen erster und letzter Kugel unter Ausnutzung der Elastizität beider Lagerringe in die zum äußeren Lagerring konzentrische Stellung gebracht werden kann, so dass die Kugeln abschließend auf dem Teilkreis der beiden Kugellaufbahnen mit gleichmäßigem Abstand zueinander verteilt und der Lagerkäfig eingesetzt werden kann.

In der Praxis hat es sich jedoch erwiesen, dass derartigen Rillenkugellagern aufgrund der geringen maximal einbaubaren Anzahl von Kugeln, die von den Abmessungen des inneren und des äußeren Lagerrings sowie dem Kugeldurchmesser abhängig ist, in Bezug auf die Tragfähigkeit des Lagers dennoch Grenzen gesetzt sind. In der Vergangenheit wurden daher eine Vielzahl von Lösungen, wie beispielsweise eine in den sich gegenüberliegenden Borden des äußeren und des inneren Lagerrings angeordnete unverschlossene Einfüllöffnung gemäß DE 151 483 oder eine ähnlich ausgebildete verschließbare Einfüllöffnung gemäß DE 24 07 477 A1, vorgeschlagen, mit denen durch eine Erhöhung der Anzahl der Kugeln eine Erhöhung der Tragfähigkeit von Rillenkugellagern erreicht werden sollte. Solche Einfüllöffnungen haben jedoch auch in der verschlossenen Ausführung den Nachteil, dass es durch deren keilförmige Einmündung in die Laufbahnen der Kugeln oder durch Grate zu einem "Hängen bleiben" oder Verklemmen der Wälzkörper an dieser Einfüllöffnung kommen kann, so dass sich derartige Lösungen in der Praxis nicht durchsetzen konnten.

Eine andere Möglichkeit, die Anzahl der Wälzkörper an einem Radialwälzlager zu erhöhen, ist darüber hinaus durch die DE 43 34 195 A1 bekannt geworden. Bei diesem, an sich als einreihiges Rillenkugellager ausgebildeten Radialwälzlager werden die Wälzkörper jedoch nicht durch Kugeln sondern durch so genannte Kugelrollen gebildet, die mit zwei symmetrisch von einer Kugelgrundform abgeflachten sowie parallel zueinander angeordneten Seitenflächen ausgebildet sind. Die Breite dieser Kugelrollen zwischen deren Seitenflächen ist dabei kleiner als der Abstand zwischen der Innenseite des äußeren Lagerrings und Außenseite des inneren Lagerrings ausgebildet, so dass das Befüllen des Lagers mit den Kugelrollen im so genannten Axialmontageverfahren erfolgen kann, bei dem die Kugelrollen axial durch den Abstand zwischen Innenring und Außenring in das Lager eingeführt werden können. Wenn sich der Mittelpunkt der Kugelrollen dann auf der Höhe der Wälzkörperlaufbahnachse befindet, werden die Kugelscheiben um 90° gedreht, so dass sie mit ihren Kugellaufflächen in den Wälzkörperlaufbahnen abrollen können.

Trotz der Möglichkeit, diese speziell ausgebildeten Kugelrollen axial in das Lager einzusetzen und das Radialwälzlager damit nahezu vollständig mit einer hohen Anzahl an Wälzkörpern ausfüllen zu können, stellt ein solches Radialwälzlager im Hinblick auf die angestrebte Erhöhung der Tragfähigkeit des Lagers jedoch allenfalls nur einen Kompromiss dar. Dies ist in der Tatsache begründet, dass die Kugelrollen wegen ihrer axialen Einführbarkeit in das Lager nur entsprechend schmal bzw. mit einer entsprechend kleinen Breite zwischen ihren Seitenflächen ausgebildet werden können, um problemlos durch den Abstand zwischen Innenring und Außenring in das Lager eingeführt werden zu können. Ebenso können die Wälzkörperlaufbahnen in den Lagerringen nur relativ flach und schmal ausgebildet werden, um das Drehen der Wälzkörper in ihre Betriebslage ermöglichen zu können, ohne dass in dieser Betriebslage ein zu hohes Radialspiel im gesamten Lager entsteht. Die relativ schmalen Kugelrollen und die flachen Wälzkörperlaufbahnen bewirken jedoch eine relativ kleine Kontaktfläche der Kugelrollen zu ihren Wälzkörperlaufbahnen, so dass sich sowohl die axiale als auch die radiale Tragfähigkeit eines solchen Radiallagers wieder verringert und der ursprüngliche Vorteil der erhöhten Anzahl von Wälzkörpern nahezu kompensiert wird.

Zur Vermeidung dieser Nachteile wurde es deshalb durch die zum Anmeldezeitpunkt der vorliegenden Patentanmeldung noch nicht veröffentlichte deutsche Patentanmeldung mit dem Aktenzeichen 10 2005 014 556.6 vorgeschlagen, die Breite der Kugelrollen zwischen deren Seitenflächen auf mindestens 70 % des Durchmessers ihrer Kugelgrundform zu vergrößern und die rillenförmigen Wälzkörperlaufbahnen in den Lagerringen mit einer Tiefe zwischen 17 % und 19% sowie einer Breite zwischen 75 %und 78 % des Durchmessers der Kugelgrundform der Kugelrollen auszubilden, da damit eine Gesamtkontaktfläche der Kugelrollen zu ihren Laufbahnen von etwa 45 % des Umfangs der Kugelgrundform der Kugelrollen entsteht, die auch die Kugeln herkömmlicher Rillenkugellager zu ihren Laufbahnen in den Lagerringen aufweisen. Da der Abstand zwischen den die Wälzkörperlaufbahnen begrenzenden Borden des inneren und des äußeren Lagerrings dadurch jedoch kleiner als die Breite der Kugelrollen wird, ist deren Einsetzen in das Radialwälzlager nur noch im Exzentermontageverfahren möglich, bei dem die Kugelrollen mit ihren Seitenflächen aneinander anliegend in den freien Raum zwischen den beiden exzentrisch zueinander angeordneten Lagerringen quer in die Wälzkörperlaufbahnen eingelegt werden. Die abgeflachten Seitenflächen der Kugelrollen ermöglichen es dabei jedoch, dass auch mit dem Exzentermontageverfahren eine erhöhte Anzahl an Wälzkörpern gegenüber einreihigen Rillenkugellagern im Lager montierbar ist. Nach dem Befüllen des Lagers mit den Kugelrollen wird der innere Lagerring dann in die zum äußeren Lagerring konzentrische Stellung gebracht, so dass die Kugelrollen auf dem Teilkreis ihrer Laufbahnen mit gleichmäßigem Abstand zueinander verteilt und um 90° verschwenkt werden können sowie abschließend der Lagerkäfig in das Lager eingesetzt werden kann.

Mit einem derart ausgebildeten Kugelrollenlager wurde zwar erreicht, dass die Kugelrollen ähnlich wie die Kugeln eines Rillenkugellagers große Kontaktflächen zu ihren Laufbahnen in den Lagerringen aufweisen und dass das Lager mit einer höheren Anzahl an Wälzkörpern als herkömmliche einreihige Rillenkugellager bestückt werden kann, dennoch mussten bedingt durch das Exzentermontageverfahren hinsichtlich der Anzahl der Wälzkörper Abstriche gegenüber der im Axialmontageverfahren möglichen höheren Wälzkörperanzahl gemacht werden. Somit konnte gegenüber herkömmlichen Rillenkugellagern zwar der axiale Bauraum und das Gewicht des Lagers verringert und dessen Axialbelastbarkeit erhöht werden, die Erhöhung der axialen und radialen Tragfähigkeit des Lagers fiel jedoch vergleichsweise gering aus.

### Aufgabe der Erfindung

Ausgehend von den dargelegten Nachteilen der Lösungen des bekannten Standes der Technik liegt der Erfindung deshalb die Aufgabe zu Grunde, ein Radialwälzlager, insbesondere einreihiges Kugelrollenlager, zu konzipieren, bei dem die Kugelrollen zur Erzielung großer Kontaktflächen zu ihren Laufbahnen in den Lagerringen sowohl eine mit dem Exzentermontageverfahren mögliche vergrößerte Breite als auch zur Erhöhung der Tragfähigkeit des Lagers eine mit dem Axialmontageverfahren erzielbare höhere Anzahl aufweisen.

### Beschreibung der Erfindung

Erfindungsgemäß wird diese Aufgabe bei einem Radialwälzlager nach dem Oberbegriff des Anspruchs 1 derart gelöst, dass zumindest einer der die rillenförmigen Laufbahnen in den Lagerringen begrenzenden axialen Borde in seiner radialen Höhe derart reduziert ausgebildet ist, dass das Radiallager über den vergrößerten Abstand dieses Bordes zu dem radial gegenüberliegenden Bord mit einer erhöhten Anzahl an Kugelrollen im Axialmontageverfahren bestückbar ist.

Bevorzugte Ausgestaltungen und Weiterbildungen des erfindungsgemäß ausgebildeten Radialwälzlagers werden in den Unteransprüchen beschrieben.

Danach ist es gemäß Anspruch 2 bei einer besonders bevorzugten Ausführungsform des erfindungsgemäß ausgebildeten Radialwälzlager vorgesehen, dass einer der beiden die Laufbahn in der Außenseite des inneren Lagerrings begrenzenden Bode höhenreduziert ausgebildet ist, da dies sich gegenüber der Höhenreduzierung eines der Borde am äußeren Lagerring als vorteilhafter bei der Montage der Kugelrollen erwiesen hat.

Ausgehend davon ist zeichnet sich das erfindungsgemäß ausgebildete Radialwälzlager nach den Ansprüchen 3 und 4 demzufolge dadurch aus, dass die Tiefe der Laufbahn im inneren Lagerring gegenüber dem nicht höhenreduzierten Bord etwa 20% und gegenüber dem höhenreduzierten Bord etwa 12% des Durchmessers der Kugelgrundform der Kugelrollen beträgt, während die Tiefe der Laufbahn in der Innenseite des äußeren Lagerrings gegenüber deren Borden beidseitig etwa 17% des Durchmessers der Kugelgrundform der Kugelrollen beträgt. Die Ausbildung der Wälzkörperlaufbahnen mit derartigen Abmessungen entspricht dabei den bei herkömmlichen Rillenkugellagern bewährten Erfahrungswerten und gewährleistet, dass die Kugelrollen abhängig von der Radiallagerluft auch bei einer zulässigen Schiefstellung des Lagers von 8 bis 16 Winkelminuten aus der Mittellage einen hohen Schmiegungsgrad zu ihren Laufbahnen aufweisen und das Lager somit die volle Tragfähigkeit behält.

Nach den Ansprüchen 5 und 6 weist die bevorzugte Ausführungsform des erfindungsgemäß ausgebildeten Radialwälzlagers schließlich noch die Merkmale auf, dass der eine Bord der Laufbahn im äußeren Lagerring zu dem radial gegenüberliegenden nicht höhenreduzierten Bord der Laufbahn im inneren Lagerring einen Abstand von etwa 63% des Durchmessers der Kugelgrundform der Kugelrollen aufweist, während der Abstand des anderen Bordes der Laufbahn im äußeren Lagerring zu dem radial gegenüberliegenden höhenreduzierten Bord der Laufbahn im inneren Lagerring etwa 71% des Durchmessers der Kugelgrundform der Kugelrollen beträgt. Da die Kugelrollen zwischen ihren Seitenflächen einen Abstand von 70% des Durchmessers der Kugelgrundform der Kugelrollen aufweisen, ist es somit ohne Schwierigkeiten möglich, diese von der Lagerseite mit dem größeren Abstand her zwischen den Borden hindurch axial in das Lager einzuführen und dann in ihre Betriebsstellung um 90° zu verschwenken. Gleichzeitig gewährleisten die durch die genannten Abstände ausreichend tiefen Laufbahnen der Kugelrollen und deren hohe Borde, dass die Kugelrollen eine die radiale Tragfähigkeit des Lagers erhöhende große Kontaktfläche zu ihren Laufbahnen aufweisen, wobei die axiale Belastbarkeit des Lagers in Richtung des höhenreduzierten Bordes geringfügig eingeschränkt ist.

Als alternative Ausführungsform des erfindungsgemäß ausgebildeten Radialwälzlagers wird es nach Anspruch 7 darüber hinaus vorgeschlagen, zusätzlich zu dem höhenreduzierten Bord am inneren Lagerring auch noch einen diagonal gegenüberliegend angeordneten Bord am äußeren Lagerring höhenreduziert auszubilden. Gemäß den Ansprüchen 8 und 9 beträgt bei dieser Ausführungsform die Tiefe der Laufbahn im äußeren Lagerring gegenüber dem nicht höhenreduzierten Bord etwa 17% und gegenüber dem höhenreduzierten Bord etwa 9% des Durchmessers der Kugelgrundform der Kugelrollen und beide Borde der Laufbahn im äußeren Lagerring weisen zu den radial gegenüberliegenden Borden der Laufbahn im inneren Lagerring jeweils Abstände von etwa 71% des Durchmessers der Kugelgrundform der Kugelrollen auf. Eine solche Ausführungsform kann besonders in solchen Fällen von Vorteil sein, wenn die im Lagerbetrieb auftretenden Axialkräfte hauptsächlich nur in die Richtung wirken, in der die Laufbahnen der Lagerringe von nicht höhenreduzierten Borden begrenzt werden. Der hauptsächliche Vorteil dieser Ausführungsform liegt jedoch darin, dass die Kugelrollen von beiden Axialseiten des Lagers her in das Kugelrollenlager eingeführt werden können, da die Abstände der radial gegenüberliegenden Borde beider Lagerringe jeweils größer als der Abstand zwischen den Seitenflächen der Kugelrollen ist.

Das erfindungsgemäß ausgebildete Kugelrollenlager weist somit gegenüber den aus dem Stand der Technik bekannten Kugelrollenlagern den Vorteil auf, dass es durch zumindest einen höhenreduziert ausgebildeten Bord einer Laufbahn in einem der Lagerringe nunmehr möglich ist, die bisher nur im Exzentermontageverfahren montierbaren Kugelrollen mit einer Breite von 70% des Durchmessers ihrer Kugelgrundform und großen Kontaktflächen zu breit ausgebildeten Laufbahnen auch im Axialmontageverfahren in das Lager einzusetzen, so dass die Anzahl dieser Kugelrollen gegenüber der im Exzentermontageverfahren möglichen Anzahl an Kugelrollen nochmals erhöht werden kann. Dadurch vereint das erfindungsgemäß ausgebildete Radialwälzlager in sich die Vorteile von bekannten Kugelrollenlagern gegenüber herkömmlichen einreihigen Rillenkugellagern, nämlich reduzierter axialer Bauraum, verringertes Gewicht und erhöhte Anzahl an Wälzkörpern, und die Vorteile von im Exzentermontageverfahren bestückten Kugelrollenlager gegenüber anderen bekannten Kugelrollenlagern, nämlich große Kontaktflächen zwischen den Wälzkörpern und ihren Laufbahnen und hohe Axialbelastbarkeit, so dass sich insgesamt eine deutlich erhöhte radiale und axiale Tragfähigkeit des erfindungsgemäßen Kugelrollenlagers gegenüber beiden bekannten Lagerarten ergibt.

### Kurze Beschreibung der Zeichnungen

Zwei bevorzugte Ausführungsformen des erfindungsgemäß ausgebildeten Radialwälzlagers werden nachfolgend unter Bezugnahme auf die beigefügten Zeichnungen näher erläutert. Dabei zeigen:
- Figur 1: eine vergrößerte Darstellung einer Vorderansicht auf ein er- findungsgemäß ausgebildetes Kugelrollenlager ohne Lager- käfig;
- Figur 2: eine vergrößerte Darstellung eines Querschnitts durch eine erste Ausführungsform eines erfindungsgemäß ausgebilde- ten Kugelrollenlagers;
- Figur 3: eine vergrößerte Darstellung eines Querschnitts durch eine zweite Ausführungsform eines erfindungsgemäß ausgebilde- ten Kugelrollenlagers.

### Ausführliche Beschreibung der Zeichnungen

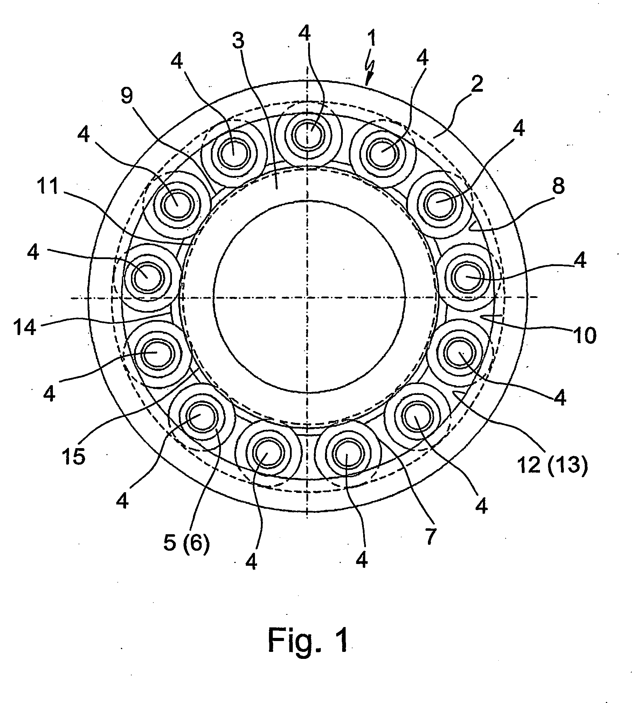

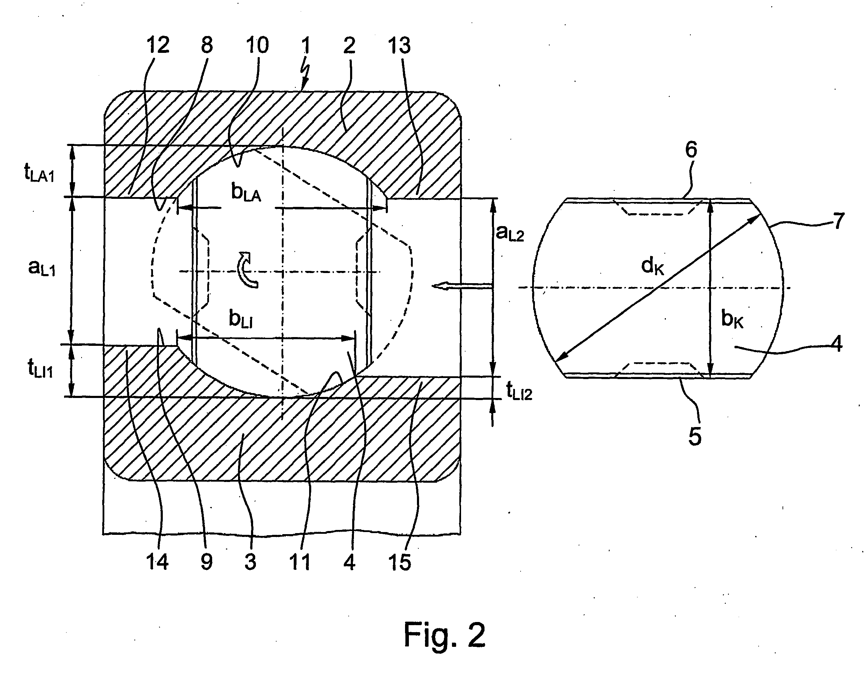

Aus Figur 1 geht deutlich ein als einreihiges Kugelrollenlager ausgebildetes Radialwälzlager 1 hervor, welches im Wesentlichen aus einem äußeren Lagerring 2 und einem inneren Lagerring 3 sowie aus einer Vielzahl zwischen diesen Lagerringen 2, 3 angeordneter Kugelrollen 4 besteht, die, wie in Figur 2 ersichtlich ist, jeweils zwei symmetrisch von einer Kugelgrundform abgeflachte, parallel zueinander angeordnete Seitenflächen 5, 6 aufweisen und durch einen nicht dargestellten Lagerkäfig in Umfangsrichtung in gleichmäßigen Abständen zueinander gehalten werden. Diese Kugelrollen 4 weisen, wie ebenfalls in Figur 2 deutlich sichtbar ist, zwischen ihren Seitenflächen 5, 6 eine Breite b_{K} von etwa 70% des Durchmessers d_{K} ihrer Kugelgrundform auf und rollen mit ihren Laufflächen 7 in zwei in die Innenseite 8 des äußeren Lagerrings 2 und in die Außenseite 9 des inneren Lagerrings 3 eingearbeitete rillenförmigen Laufbahnen 10, 11 ab, welche durch jeweils zwei axiale Borde 12, 13 und 14, 15 begrenzt sind und eine Tiefe t_{LA}, t_{LI} sowie eine Breite b_{LA}, b_{LI} aufweisen, mit der die Gesamtkontaktfläche der Kugelrollen 4 zu ihren Laufbahnen 10, 11 etwa 45% des Umfangs der Kugelgrundform der Kugelrollen 4 beträgt.

Um mit derart ausgebildeten Kugelrollen 4 die Tragfähigkeit des Radiallagers 1 weiter zu erhöhen, wird es erfindungsgemäß vorgeschlagen, dass der die rillenförmige Laufbahn 11 im inneren Lagerring 3 begrenzenden axiale Bord 15, wie in Figur 2 dargestellt, in seiner radialen Höhe derart reduziert ausgebildet ist, dass das Radiallager 1 über den vergrößerten Abstand a_{L2} dieses Bordes 15 zu dem radial gegenüberliegenden Bord 13 des äußeren Lagerrings 2 mit einer erhöhten Anzahl an Kugelrollen 4 im Axialmontageverfahren bestückbar ist.

Dies wird zur Erreichung eines hohen Schmiegungsgrades der Kugelrollen 4 zu ihren Laufbahnen 10, 11 in vorteilhafter Weise derart realisiert, dass die Tiefe t_{LI1} der Laufbahn 11 im inneren Lagerring 3 gegenüber dem nicht höhenreduzierten Bord 14, wie in Figur 2 angedeutet, mit etwa 20% und deren Tiefe t_{LI2} gegenüber dem höhenreduzierten Bord 15 mit etwa 12% des Durchmessers d_{K} der Kugelgrundform der Kugelrollen 4 ausgebildet wird. Ebenso ist in Figur 2 durch Maßpfeile angedeutet, dass die Tiefe t_{LA1} der Laufbahn 10 in der Innenseite 8 des äußeren Lagerrings 2 gegenüber deren Borden 12, 13 dabei unverändert etwa 17% des Durchmessers d_{K} der Kugelgrundform der Kugelrollen 4 beträgt und somit der Ausbildung der Laufbahnen an herkömmlichen einreihigen Rillenkugellagern entspricht.

Wie Figur 2 desweiteren zeigt, ergibt sich jedoch durch die unterschiedlich hohe Ausführung der Borde 12, 13 und 14, 15 an beiden Lagerringen 2, 3, dass der eine Bord 12 der Laufbahn 10 im äußeren Lagerring 2 zu dem radial gegenüberliegenden nicht höhenreduzierten Bord 14 der Laufbahn 11 im inneren Lagerring 3 einen Abstand a_{L1} von etwa 63% des Durchmessers d_{K} der Kugelgrundform der Kugelrollen 4 aufweist, während der andere Bord 13 der Laufbahn 10 im äußeren Lagerring 2 zu dem radial gegenüberliegenden höhenreduzierten Bord 15 der Laufbahn 11 im inneren Lagerring 3 einen Abstand a_{L2} von etwa 71% des Durchmessers d_{K} der Kugelgrundform der Kugelrollen 4 aufweist. Da die Kugelrollen 4 zwischen ihren Seitenflächen 5, 6 einen Abstand von 70% des Durchmessers ihrer Kugelgrundform aufweisen, ist es somit ohne Schwierigkeiten möglich, diese von der Lagerseite mit dem Abstand a_{L2} von 71% her zwischen den Borden 13, 15 hindurch axial in das Radiallager 1 einzuführen und dann, wie in Figur 2 durch Bewegungspfeile und eine gestrichelt dargestellte Zwischenstellung angedeutet, in ihre Betriebsstellung um 90° zu verschwenken.

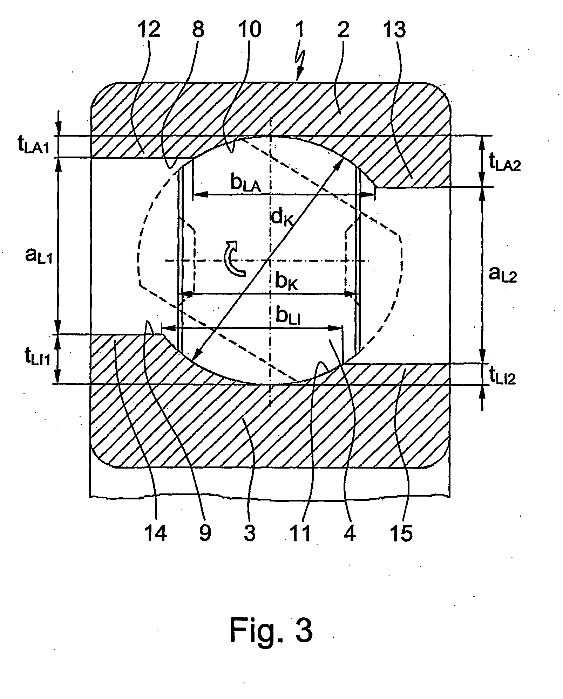

Aus Figur 3 geht schließlich noch eine zweite Ausführungsform eines erfindungsgemäß ausgebildeten Radiallagers 1 hervor, bei der zusätzlich zu dem in der ersten Ausführungsform beschriebenen höhenreduzierten Bord 15 am inneren Lagerring 3 noch ein diagonal gegenüberliegend angeordneter Bord 12 am äußeren Lagerring 3 höhenreduziert ausgebildet ist. Bei dieser Ausführungsform beträgt die Tiefe t_{LA1} der Laufbahn 10 im äußeren Lagerring 2 gegenüber dem höhenreduzierten Bord 12 etwa 9% und deren Tiefe t_{LA2} gegenüber dem nicht höhenreduzierten Bord etwa 12% des Durchmessers d_{K} der Kugelgrundform der Kugelrollen 4, so dass beide Borde 12, 13 der Laufbahn 10 im äußeren Lagerring 2 zu den radial gegenüberliegenden Borden 14, 15 der Laufbahn 11 im inneren Lagerring 3 jeweils Abstände von etwa 71% des Durchmessers d_{K} der Kugelgrundform der Kugelrollen 4 aufweisen. Eine solche Ausführungsform ist dann anwendbar, wenn die im Lagerbetrieb auftretenden Axialkräfte hauptsächlich in die Richtung der nicht höhenreduzierten Borde 13, 14 der Lagerringe 2, 3 wirken und hat sich dahingehend als vorteilhaft erwiesen, dass die Kugelrollen 4 von beiden Axialseiten her in das Radiallagers 1 eingeführt werden können.

### Bezugszahlenliste

- 1: Radialwälzlager
- 2: äußerer Lagerring
- 3: innerer Lagerring
- 4: Kugelrollen
- 5: Seitenfläche von 4
- 6: Seitenfläche von 4
- 7: Lauffläche von 4
- 8: Innenseite von 2
- 9: Außenseite von 3
- 10: Laufbahn in 8
- 11: Laufbahn in 9
- 12: Bord von 10
- 13: Bord von 10
- 14: Bord von 11
- 15: Bord von 11
- b_{K}: Breite von 4
- d_{K}: Durchmesser der Kugelgrundform von 4
- t_{LA1}: Tiefe von 10
- t_{LA2}: Tiefe von 10
- t_{LI1}: Tiefe von 11
- t_{LI2}: Tiefe von 11
- b_{LA}: Breite von 10
- b_{LI}: Breite von 11
- a_{L1}: Abstand zwischen 12 und 14
- a_{L2}: Abstand zwischen 13 und 15

## Patentansprüche

1. Radialwälzlager, insbesondere einreihiges Kugelrollenlager, welches im Wesentlichen aus einem äußeren Lagerring (2) und einem inneren Lagerring (3) sowie aus einer Vielzahl zwischen diesen Lagerringen (2, 3) angeordneter Kugelrollen (4) besteht, die jeweils zwei symmetrisch von einer Kugelgrundform abgeflachte, parallel zueinander angeordnete Seitenflächen (5, 6) aufweisen und durch einen Lagerkäfig in Umfangsrichtung in gleichmäßigen Abständen zueinander gehalten werden, wobei die Kugelrollen (4) zwischen ihren Seitenflächen (5, 6) eine Breite (b_{K}) von etwa 70% des Durchmessers (d_{K}) ihrer Kugelgrundform aufweisen und mit ihren Laufflächen (7) in zwei in die Innenseite (8) des äußeren Lagerrings (2) und in die Außenseite (9) des inneren Lagerrings (3) eingearbeitete rillenförmigen Laufbahnen (10, 11) abrollen, welche durch jeweils zwei axiale Borde (12, 13, 14, 15) begrenzt sind und eine Tiefe (t_{LA}, t_{LI}) sowie eine Breite (b_{LA}, b_{LI}) aufweisen, mit der die Gesamtkontaktfläche der Kugelrollen (4) zu ihren Laufbahnen (10, 11) etwa 45% des Umfangs der Kugelgrundform der Kugelrollen (4) beträgt, **dadurch gekennzeichnet, dass** zumindest einer der die rillenförmigen Laufbahnen (10, 11) in den Lagerringen (2, 3) begrenzenden axialen Borde (12, 13, 14, 15) in seiner radialen Höhe derart reduziert ausgebildet ist, dass das Radiallager (1) über den vergrößerten Abstand (a_{L2}) dieses Bordes (12, 13, 14, 15) zu dem radial gegenüberliegenden Bord (12, 13, 14, 15) mit einer erhöhten Anzahl an Kugelrollen (4) im Axialmontageverfahren bestückbar ist.

2. Radialwälzlager nach Anspruch 1, **dadurch gekennzeichnet, dass** bevorzugt einer der die Laufbahn (11) in der Außenseite (9) des inneren Lagerrings (3) begrenzenden Bode (14, 15) höhenreduziert ausgebildet ist.

3. Radialwälzlager nach Anspruch 2, **dadurch gekennzeichnet, dass** die Tiefe (t_{LI1}) der Laufbahn (11) im inneren Lagerring (3) gegenüber dem nicht höhenreduzierten Bord (14) etwa 20% und deren Tiefe (t_{LI2}) gegenüber dem höhenreduzierten Bord (15) etwa 12% des Durchmessers (d_{K}) der Kugelgrundform der Kugelrollen (4) beträgt.

4. Radialwälzlager nach Anspruch 3, **dadurch gekennzeichnet, dass** die Tiefe (t_{LA1}) der Laufbahn (10) in der Innenseite (8) des äußeren Lagerrings (2) gegenüber deren Borden (12, 13) etwa 17% des Durchmessers (d_{K}) der Kugelgrundform der Kugelrollen (4) beträgt.

5. Radialwälzlager nach Anspruch 4, **dadurch gekennzeichnet, dass** der eine Bord (12) der Laufbahn (10) im äußeren Lagerring (2) zu dem radial gegenüberliegenden nicht höhenreduzierten Bord (14) der Laufbahn (11) im inneren Lagerring (3) einen Abstand (a_{L1}) von etwa 63% des Durchmessers (d_{K}) der Kugelgrundform der Kugelrollen (4) aufweist.

6. Radialwälzlager nach Anspruch 4, **dadurch gekennzeichnet, dass** der andere Bord (13) der Laufbahn (10) im äußeren Lagerring (2) zu dem radial gegenüberliegenden höhenreduzierten Bord (15) der Laufbahn (11) im inneren Lagerring (3) einen Abstand (a_{L2}) von etwa 71 % des Durchmessers (d_{K}) der Kugelgrundform der Kugelrollen (4) aufweist.

7. Radialwälzlager nach Anspruch 3, **dadurch gekennzeichnet, dass** zusätzlich zu dem höhenreduzierten Bord (15) am inneren Lagerring (3) ein diagonal gegenüberliegend angeordneter Bord (12) am äußeren Lagerring (3) höhenreduziert ausgebildet ist.

8. Radialwälzlager nach Anspruch 7, **dadurch gekennzeichnet, dass** die Tiefe (t_{LA1}) der Laufbahn (10) im äußeren Lagerring (2) gegenüber dem höhenreduzierten Bord (12) etwa 9% und deren Tiefe (t_{LA2}) gegenüber dem nicht höhenreduzierten Bord (13) etwa 17% des Durchmessers (d_{K}) der Kugelgrundform der Kugelrollen (4) beträgt.

9. Radialwälzlager nach Anspruch 8, **dadurch gekennzeichnet, dass** beide Borde (12, 13) der Laufbahn (10) im äußeren Lagerring (2) zu den radial gegenüberliegenden Borden (14, 15) der Laufbahn (11) im inneren Lagerring (3) jeweils Abstände (a_{L1}, a_{L2}) von etwa 71% des Durchmessers (d_{K}) der Kugelgrundform der Kugelrollen (4) aufweisen.

## Claims

1. Radial rolling bearing, in particular single-row spherical-roller bearing, which consists essentially of an outer bearing ring (2) and of an inner bearing ring (3) and also of a multiplicity of spherical rollers (4) which are arranged between these bearing rings (2, 3) and which have in each case two side faces (5, 6) flattened symmetrically from a basic spherical shape and arranged parallel to one another and which are held at uniform distances from one another in the circumferential direction by means of a bearing cage, the spherical rollers (4) having between their side faces (5, 6) a width (b_{K}) of about 70% of the diameter (d_{K}) of their basic spherical shape and rolling with their running surfaces (7) in two groove-shaped raceways (10, 11) which are incorporated into the inside (8) of the outer bearing ring (2) and into the outside (9) of the inner bearing ring (3) and which are delimited in each case by two axial rims (12, 13, 14, 15) and have a depth (t_{LA}, t_{LI}) and a width (b_{LA}, b_{LI}), by means of which the overall contact surface of the spherical rollers (4) with their raceways (10, 11) amounts to about 45% of the circumference of the basic spherical shape of the spherical rollers (4), **characterized in that** at least one of the axial rims (12, 13, 14, 15) delimiting the groove-shaped raceways (10, 11) in the bearing rings (2, 3) is designed to be reduced in its radial height in such a way that the radial bearing (1) can be equipped with an increased number of spherical rollers (4) by the axial mounting method via the enlarged clearance (a_{L2}) of this rim (12, 13, 14, 15) with respect to the radially opposite rim (12, 13, 14, 15).

2. Radial rolling bearing according to Claim 1, **characterized in that,** preferably, one of the rims (14, 15) delimiting the raceway (11) in the outside (9) of the inner bearing ring (3) is designed with reduced height.

3. Radial rolling bearing according to Claim 2, **characterized in that** the depth (t_{LI1}) of the raceway (11) in the inner bearing ring (3) amounts, as compared with the rim (14) not of reduced height, to about 20% and its depth (t_{LI2}) amounts, as compared with the rim (15) of reduced height, to about 12% of the diameter (d_{K}) of the basic spherical shape of the spherical rollers (4).

4. Radial rolling bearing according to Claim 3, **characterized in that** the depth (t_{LA1}) of the raceway (10) in the inside (8) of the outer bearing ring (2) amounts, as compared with its rims (12, 13), to about 17% of the diameter (d_{K}) of the basic spherical shape of the spherical rollers (4).

5. Radial rolling bearing according to Claim 4, **characterized in that** one rim (12) of the raceway (10) in the outer bearing ring (2) has a clearance (a_{L1}) of about 63% of the diameter (d_{K}) of the basic spherical shape of the spherical rollers (4) with respect to the radially opposite rim (14) not of reduced height of the raceway (11) in the inner bearing ring (3).

6. Radial rolling bearing according to Claim 4, **characterized in that** the other rim (13) of the raceway (10) in the outer bearing ring (2) has a clearance (a_{L2}) of about 71% of the diameter (d_{K}) of the basic spherical shape of the spherical rollers (4) with respect to the radially opposite rim (15) of reduced height of the raceway (11) in the inner bearing ring (3).

7. Radial rolling bearing according to Claim 3, **characterized in that,** in addition to the rim (15) of reduced height on the inner bearing ring (3), a rim (12) arranged diagonally opposite is formed with reduced height on the outer bearing ring (3).

8. Radial rolling bearing according to Claim 7, **characterized in that** the depth (t_{LA1}) of the raceway (10) in the outer bearing ring (2) amounts, as compared with the rim (12) of reduced height, to about 9% and its depth (t_{LA2}) amounts, as compared with the rim (13) not of reduced height, to about 17% of the diameter (d_{K}) of the basic spherical shape of the spherical rollers (4).

9. Radial rolling bearing according to Claim 8, **characterized in that** the two rims (12, 13) of the raceway (10) in the outer bearing ring (2) have in each case clearances (a_{L1}, a_{L2}) of about 71% of the diameter (d_{K}) of the basic spherical shape of the spherical rollers (4) with respect to the radially opposite rims (14, 15) of the raceway (11) in the inner bearing ring (3).

## Revendications

1. Palier à roulement radial, en particulier roulement à billes à une rangée, qui se compose essentiellement d'une bague de palier extérieure (2) et d'une bague de palier intérieure (3) ainsi que d'une pluralité de billes de roulement (4) disposées entre ces bagues de palier (2, 3), qui présentent à chaque fois deux surfaces latérales (5, 6) disposées parallèlement l'une à l'autre, aplaties symétriquement à partir d'une forme de base sphérique, et qui sont maintenues à intervalles uniformes les unes par rapport aux autres dans la direction périphérique par une cage de palier, les billes de roulement (4) présentant, entre leurs surfaces latérales (5, 6), une largeur (b_{K}) d'environ 70% du diamètre (d_{K}) de leur forme de base sphérique, et roulant avec leurs surfaces de roulement (7) dans deux pistes de roulement (10, 11) en forme de rainure pratiquées dans le côté intérieur (8) de la bague de palier extérieure (2) et dans le côté extérieur (9) de la bague de palier intérieure (3), qui sont limitées à chaque fois par deux bordures axiales (12, 13, 14, 15) et présentent une profondeur (t_{LA}, t_{LI}) ainsi qu'une largeur (b_{LA}, b_{LI}), avec laquelle la surface de contact totale des billes de roulement (4) avec leurs pistes de roulement (10, 11) représente environ 45% de la périphérie de la forme de base sphérique des billes de roulement (4), **caractérisé en ce qu'**au moins l'une des bordures axiales (12, 13, 14, 15) limitant les pistes de roulement en forme de rainure (10, 11) dans les bagues de palier (2, 3) est réalisée avec une hauteur radiale réduite de telle sorte que le palier radial (1) puisse être équipé dans un procédé de montage axial avec un nombre accru de billes de roulement (4) sur la distance accrue (a_{L2}) de cette bordure (12, 13, 14, 15) par rapport à la bordure radialement opposée (12, 13, 14, 15).

2. Palier à roulement radial selon la revendication 1, **caractérisé en ce que** de préférence l'une des bordures (14, 15) limitant la piste de roulement (11) dans le côté extérieur (9) de la bague de palier intérieure (3) est réalisée avec une hauteur réduite.

3. Palier à roulement radial selon la revendication 2, **caractérisé en ce que** la profondeur (t_{LI1}) de la piste de roulement (11) dans la bague de palier (3) représente, en face de la bordure (14) de hauteur non réduite, environ 20%, et sa profondeur (t_{LI2}) représente, en face de la bordure de hauteur réduite (15), environ 12%, du diamètre (d_{K}) de la forme de base sphérique des billes de roulement (4).

4. Palier à roulement radial selon la revendication 3, **caractérisé en ce que** la profondeur (t_{LA1}) de la piste de roulement (10) dans le côté intérieur (8) de la bague de palier extérieure (2), en face de ses bordures (12, 13), vaut environ 17% du diamètre (d_{K}) de la forme de base sphérique des billes de roulement (4).

5. Palier à roulement radial selon la revendication 4, **caractérisé en ce que** l'une des bordures (12) de la piste de roulement (10) présente, dans la bague de palier extérieure (2), par rapport à la bordure (14) de hauteur non réduite, radialement opposée, de la piste de roulement (11) dans la bague de palier intérieure (3), une distance (a_{L1}) d'environ 63% du diamètre (d_{K}) de la forme de base sphérique des billes de roulement (4).

6. Palier à roulement radial selon la revendication 4, **caractérisé en ce que** l'autre bordure (13) de la piste de roulement (10) dans la bague de palier extérieure (2) présente, par rapport à la bordure de hauteur réduite (15) radialement opposée de la piste de roulement (11), dans la bague de palier intérieure (3), une distance (a_{L2}) d'environ 71% du diamètre (d_{K}) de la forme de base sphérique des billes de roulement (4).

7. Palier à roulement radial selon la revendication 3, **caractérisé en ce qu'**en plus de la bordure (15) de hauteur réduite sur la bague de palier intérieure (3), une bordure (12) disposée de manière diamétralement opposée sur la bague de palier extérieure (3) est réalisée avec une hauteur réduite.

8. Palier à roulement radial selon la revendication 7, **caractérisé en ce que** la profondeur (t_{LA1}) de la piste de roulement (10) dans la bague de palier (2), en face de la bordure de hauteur réduite (12), vaut environ 9%, et sa profondeur (t_{LA2}) en face de la bordure (13) de hauteur non réduite, vaut environ 17% du diamètre (d_{K}) de la forme de base sphérique des billes de roulement (4).

9. Palier à roulement radial selon la revendication 8, **caractérisé en ce que** les deux bordures (12, 13) de la piste de roulement (10) dans la bague de palier extérieure (2) par rapport aux bordures radialement opposées (14, 15) de la piste de roulement (11) dans la bague de palier intérieure (3) présentent à chaque fois des distances (a_{L1}, a_{L2}) d'environ 71% du diamètre (d_{K}) de la forme de base sphérique des billes de roulement (4).
